(19) Europäisches Patentamt / European Patent Office / Office européen des brevets

(11) **EP 2 602 911 B1**

(12) **EUROPEAN PATENT SPECIFICATION**

(45) Date of publication and mention
of the grant of the patent:
**26.09.2018 Bulletin 2018/39**

(21) Application number: **11192504.6**

(22) Date of filing: **08.12.2011**

(51) Int Cl.:
*H02K 1/27* (2006.01)     *B60L 11/12* (2006.01)
*B60L 3/00* (2006.01)     *B60L 11/00* (2006.01)
*B60L 15/02* (2006.01)     *E02F 9/20* (2006.01)
*B60L 15/20* (2006.01)

(54) **Rotor with embedded permanent magnets for power transmission chain in a mobile working machine**

Rotor mit eingebetteten Permanentmagneten für den Antriebsstrang einer mobilen Arbeitsmaschine

Rotor aux aimants permanents encastrés pour la chaîne d'entraînement d'un chariot mobile de travaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.06.2013 Bulletin 2013/24**

(73) Proprietor: **Danfoss Mobile Electrification Oy**
**53600 Lappeenranta (FI)**

(72) Inventors:
• **Rilla, Marko**
**53100 Lappeenranta (FI)**

• **Päivinen, Timo**
**53850 Lappeenranta (FI)**

(74) Representative: **Finnpatent Oy**
**Smart Chemistry Park**
**Raisionkaari 55**
**21200 Raisio (FI)**

(56) References cited:
**EP-A1- 2 012 410     EP-A2- 2 362 525**
**JP-A- 2010 110 049     US-A1- 2005 269 888**
**US-A1- 2008 272 667**

**Description**

**Field of the invention**

The invention relates generally to rotating electrical machines. More particularly, the invention relates to a rotor comprising interior permanent magnets. Furthermore, the invention relates to a permanent magnet electrical machine for e.g. a mobile working machine. Furthermore, the invention relates to a mobile working machine.

**Background**

Rotating electrical machines, such as motors and generators, generally comprise a rotor and a stator which are arranged such that a magnetic flux is developed between these two. In a permanent magnet "PM" electrical machine, a number of permanent magnets are usually mounted on the rotor, while the stator is provided with stator windings. The permanent magnets and electrical currents in the stator windings cause a magnetic flux to flow across the air-gap between the rotor and the stator.

A rotor of a permanent magnet electrical machine comprises typically a ferromagnetic core structure, a shaft, and permanent magnets arranged to produce magnetic fluxes so as to form magnetic poles of the rotor. When designing a rotor of a permanent magnet electrical machine there are various aspects to be taken into account. The electro-magnetic characteristics of the rotor should be such that it can provide desired performance with sufficiently low losses, the mechanical characteristics of the rotor should be such that the mechanical structures of the rotor can withstand the ensued mechanical stresses, and the thermal characteristics of the rotor should be such that the heat caused by the losses can be removed from the rotor. Furthermore, the high price of high-quality permanent magnet material causes a need to minimize the amount of permanent magnet material used in the rotor.

Publication EP2362525 discloses a rotor containing buried permanent magnets, i.e. interior permanent magnets. The ferromagnetic core structure of the rotor comprises cavities dividing the ferromagnetic core structure into pole regions, a yoke region, and bridges between the pole regions and the yoke region. The permanent magnets are located in the cavities and they are arranged to produce magnetic fluxes penetrating the pole regions in radial directions so as to form magnetic poles of the rotor. The direction of the magnetic flux penetrating each pole region defines a direct-axis of the corresponding magnetic pole and a symmetry line between direct-axes of two adjacent magnetic poles defines a quadrature-axis between these two adjacent magnetic poles. The cavities have portions which are not filled by the permanent magnet material so as to form non-ferromagnetic regions for reducing leakage fluxes of the permanent magnets and thereby to reduce the needed amount of the permanent magnet material. The shapes and dimensions of the bridges between the pole regions and the yoke region are selected to balance counter-opposing electromagnetic and mechanical characteristics of the rotor. Although the rotor comprises the above-mentioned non-ferromagnetic regions, the leakage fluxes of the permanent magnets may still constitute a significant portion of the total flux generated by the permanent magnets. Thus, there is a need to further reduce the leakage fluxes of the permanent magnets in order to decrease the needed amount of the expensive permanent magnet material.

Publication US2008272667 describes a permanent magnet rotor that comprises a plurality of bar apertures, a plurality of flux barriers separate from the bar apertures, and a plurality of magnet slots separate from the bar apertures and the flux barriers. The rotor also comprises a plurality of permanent magnets, each positioned in one of the magnet slots. A plurality of conductive bars are each positioned in one of the bar apertures. A first end ring is coupled to first ends of the conductive bars and a second end ring is coupled to the second ends of the conductive bars.

Publication EP2012410 describes a permanent magnet rotor which reduces cogging torque and vibration noise. The rotor comprises permanent magnets embedded in the iron core of the rotor and non-magnetic flux barriers for reducing leakage fluxes at the edges of the permanent magnets.

Publication US2005269888 describes a permanent magnet rotor that comprises permanent magnets embedded in the iron core of the rotor and non-magnetic flux barriers for reducing leakage fluxes at the edges of the permanent magnets and for preventing magnetic flux generated by the stator from being diverted to flow into the permanent magnets.

Publication JP2010110049 describes a permanent magnet rotor where permanent magnets are inserted into magnet insertion holes of the rotor core. The permanent magnet rotor comprises balance adjustment plates which are set on both end faces of the rotor core so that resin injection holes of the balance adjustment plates are substantially opposed to the magnet insertion holes. Resin is injected from the resin injection holes and thereby the resin is injected into between the permanent magnets and the magnet insertion holes. The balance of the permanent magnet rotor is adjusted by cutting material from the balance adjustment plates.

**Summary**

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new rotor for a permanent magnet electrical machine of, for example, a mobile working machine. The rotor comprises:

- a ferromagnetic core structure comprising cavities dividing the ferromagnetic core structure into pole regions, a yoke region, and bridges between the pole regions and the yoke region, and

- permanent magnets located in the cavities and arranged to produce magnetic fluxes penetrating the pole regions in radial directions so as to form magnetic poles of the rotor, the direction of the magnetic flux penetrating each pole region defining a direct-axis of the corresponding magnetic pole and a symmetry line between direct-axes of two adjacent magnetic poles defining a quadrature-axis between these two adjacent magnetic poles.

The cavities have portions which extend towards the quadrature-axis and are free from the permanent magnets. Thus, non-ferromagnetic regions for reducing leakage fluxes of the permanent magnets are being formed. Furthermore, the above-mentioned portions of the cavities have a shape curving towards the geometrical rotation axis of the rotor and the radial height of the said portions of the cavities is greater than the radial thickness of those parts of the permanent magnets which abut on the said portions of the cavities. As the portions of the cavities have the shape curving towards the geometrical rotation axis, the cavities can be made longer and thereby the routes of the leakage fluxes around the non-ferromagnetic regions can be made longer. This further reduces the leakage fluxes of the permanent magnets. Each of surfaces of the ferromagnetic core structure defining the above-mentioned portions of the cavities and facing towards the non-ferromagnetic regions defines a section curve with a plane perpendicular to the geometrical rotation axis of the rotor so that:

a) the section curve is curvilinear on a portion of the section curve from a first point of the section curve farthest from the geometrical rotation axis of the rotor to a second point of the section curve nearest to the geometrical rotation axis of the rotor,

b) the radius of curvature of the section curve depends on distance to the geometrical rotation axis of the rotor so that, on the portion of the section curve from the first point of the section curve to the second point of the section curve, the radius of curvature is an ascending function of the distance, and

c) the section curve is substantially tangentially directed at the first point of the section curve and meets the relevant permanent magnet at the first point of the section curve.

Because of the above-presented features a)-c), the cavities can be extended in the radial directions towards the geometrical rotation axis of the rotor without excessively sacrificing the mechanical characteristics of the rotor. By reducing the leakage fluxes of the permanent magnets, the needed amount of the permanent magnet material can be decreased. The permanent magnets are, advantageously but not necessarily, rectangular prisms which are more economical to manufacture than, for example, curved permanent magnets. Furthermore, a curved shape can be approximated with two or more rectangular permanent magnets which are arranged to form a fraction-line arch.

In accordance with the second aspect of the invention, there is provided a new permanent magnet electrical machine for a mobile working machine. The permanent magnet electrical machine comprises a stator and a rotor, wherein the rotor is according to the present invention.

In accordance with the third aspect of the invention, there is provided a new mobile working machine. The mobile working machine comprises:

- a combustion engine, and

- an electromechanical power transmission chain between the combustion engine and one or more wheels of the mobile working machine,

wherein the electromechanical transmission chain comprises at least one permanent magnet electrical machine according to the present invention.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

A number of non-limiting exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

**Brief description of the figures**

The exemplifying embodiments of the invention and their advantages are explained in greater detail below in the sense of examples and with reference to the accompanying drawings, in which:

figure 1a shows a section view of a permanent magnet electrical machine according to an embodiment of the invention, the section being taken along a plane perpendicular to the geometrical rotation axis of the rotor,

figure 1b shows a partial magnification of figure 1a,

figure 2 shows a section view of a rotor according to an embodiment of the invention, the section being taken along a plane perpendicular to the geometrical rotation axis of the rotor,

figure 3 shows a section view of a rotor according to an embodiment of the invention, the section being taken along a plane perpendicular to the geometrical rotation axis of the rotor, and

figure 4 shows an illustration of a mobile working machine according to an embodiment of the invention.

**Description of the exemplifying embodiments**

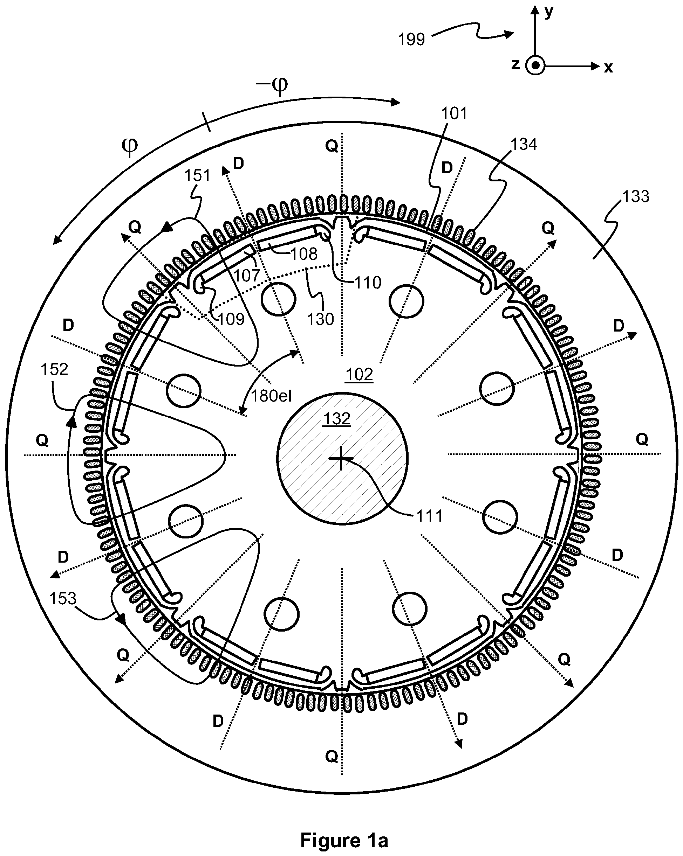

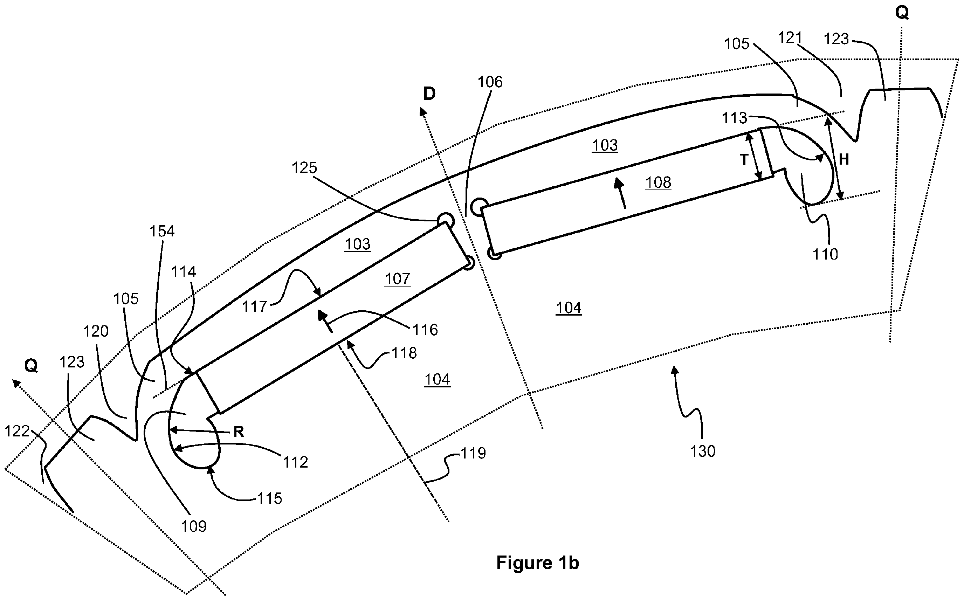

Rotors according to advantageous and exemplifying embodiments of the invention are described below with references to figures 1a and 1b.

Figure 1a shows a section view of a permanent magnet electrical machine according to an exemplifying embodiment of the invention. The permanent magnet electrical machine comprises a rotor 101 attached to a shaft 132 and a stator 133 provided with stator windings 134. The section shown in figure 1a is taken along a plane perpendicular to the geometrical rotation axis 111 of the rotor 101, i.e. the section is taken along the xy-plane of a coordinate system 199. The geometrical rotation axis 111 is parallel to the z-axis of the coordinate system 199. Figure 1b shows a magnification of a portion 130 of figure 1a. The rotor 101 comprises a ferromagnetic core structure 102 that can be composed of ferromagnetic steel sheets stacked in the direction of the geometrical rotation axis 111 of the rotor. As another exemplifying alternative, the ferromagnetic core structure 102 can be made of solid steel and furthermore it can be the same piece with the shaft 132. It is also possible that the ferromagnetic core structure 102 is made of or comprises ferrite or iron powder composites such as SOMALOY® (Soft Magnetic Composite). In the case where the ferromagnetic core structure is made of solid steel, the air-gap between the rotor and the stator is typically larger than in the case where the ferromagnetic core structure is composed of stacked steel sheets in order to keep the pulsation losses due the stator slotting at a sufficiently low level. The ferromagnetic core structure 102 comprises cavities which divide the ferromagnetic core structure into pole regions 103, a yoke region 104, and bridges 105, 106 between the pole regions and the yoke region as illustrated in figure 1b. The rotor 101 comprises permanent magnets, such as permanent magnets 107 and 108, located in the cavities and arranged to produce magnetic fluxes penetrating the pole regions in radial directions so as to form magnetic poles of the rotor. In figure 1a, flux lines 151, 152, and 153 are shown for the sake of illustration. The direction of the magnetic flux penetrating each pole region defines a direct-axis D of the corresponding magnetic pole and a symmetry line between direct-axes of two adjacent magnetic poles defines a quadrature-axis Q between these two adjacent magnetic poles. The direct- and quadrature-axes are illustrated in figured 1a and 1b. The cavities have portions, such as portions 109 and 110, which extend towards the quadrature-axis Q and which are free from the permanent magnets. Therefore, non-ferromagnetic regions for reducing leakage fluxes of the permanent magnets are being formed. Furthermore, the above-mentioned portions of the cavities have a shape curving towards the geometrical rotation axis 111 of the rotor and, as illustrated in figure 1b, the radial height H of the said portions of the cavities is greater than the radial thickness T of those parts of the permanent magnets which abut on the said portions of the cavities. The radial height H of the portions of the cavities is advantageously at least 10 % greater than the radial thickness T of the parts of the permanent magnets abutting on the portions of the cavities. As the portions of the cavities have the shape curving towards the geometrical rotation axis, the cavities can be made longer and thereby the routes of the leakage fluxes around the non-ferromagnetic regions can be made longer. This further reduces the leakage fluxes of the permanent magnets.

In a rotor according to an exemplifying embodiment of the invention, surfaces 112 and 113 of the ferromagnetic core structure defining the above-mentioned portions 109 and 110 of the cavities and facing towards the non-ferromagnetic regions have section curves with the plane perpendicular to the geometrical rotation axis 111 of the rotor so that each of the section curves is curvilinear on a portion of the section curve from a first point 114 of the section curve that is farthest from the geometrical rotation axis of the rotor to a second point 115 of the section curve that is nearest to the geometrical rotation axis of the rotor. Smooth and curvilinear shapes of the section curves are advantageous from the viewpoint of mechanical stresses in the material of the ferromagnetic core structure. If the section curves had, for example, sharp angles pointing towards the material of the ferromagnetic core structure and opening towards the cavities, high local stress-maxima would tend to be formed in the vicinity of the points of the sharp angles.

In a rotor according to an exemplifying embodiment of the invention, the radius of curvature R of each section curve depends advantageously on the distance to the geometrical rotation axis 111 of the rotor so that the radius of curvature R is an ascending function of the distance on the portion of the section curve from the first point 114 of the section curve to the second point 115 of the section curve. Therefore, the section curve has a form of a spiral on the portion from the first point 114 to the second point 115. Thus, the radius of curvature R of the section curves is such that the tendency to high local mechanical stress maxima in the material of the ferromagnetic core structure is smaller where the centrifugal acceleration $\omega^2 r$ that causes mechanical stresses in the material of the ferromagnetic core structure is higher. In the above-mentioned formula $\omega^2 r$, $\omega$ is the angular velocity of the rotor and r is the distance to the geometrical rotation axis.

In a rotor according to an exemplifying embodiment of the invention, each section curve is substantially tangentially directed and meets the relevant permanent magnet at its farthest point from the geometrical rotation axis of the rotor. This is illustrated in figure 1b where the section curve is farthest from the geometrical rotation axis and meets the permanent magnet 107 at the point 114 at which the section curve is parallel to the tangentially directed line 154.

In a rotor according to an exemplifying embodiment of the invention, the permanent magnets are rectangular prisms, a direction of magnetization of each permanent magnet is substantially perpendicular to two mutually opposite facets of that permanent magnet, and a spatial line via a center of mass of that permanent magnet and perpendicular to the two mutually opposite facets of that permanent magnet is substantially radially directed. This is illustrated in figure 1b where the direction of magnetization 116 of the permanent magnet 107 is illustrated with an arrow that is substantially perpendicular to two mutually opposite facets 117 and 118 of the permanent magnet 107, and the spatial line 119 via the center of mass of the permanent magnet 107 and perpendicular to the two mutually opposite facets 117 and 118 of the permanent magnet is substantially radially directed, i.e. the spatial line 119 intersects the geometrical rotation axis 111.

In a rotor according to an exemplifying embodiment of the invention, the ferromagnetic core structure comprises grooves, such as grooves 120 and 121, on its outer surface between adjacent magnetic poles of the rotor for narrowing the bridges 105 which are tangentially as outmost in each magnetic pole of the rotor so as to reduce the leakage fluxes of the permanent magnets. The term "tangentially as outmost" means outmost in the directions defined by the angles φ and - φ shown in figure 1a. Advantageously, there are two grooves, such as grooves 120 and 122, between adjacent magnetic poles of the rotor so that there is a ridge 123 between these two grooves. The purpose of the ridge 123 is to increase the quadrature-axis inductance $L_Q$. In the permanent magnet electrical machine shown in figure 1a, the direct axis-inductance $L_D$ is smaller than the quadrature-axis inductance $L_Q$ because the relative permeability $\mu_r$ of permanent magnets is significantly smaller than that of the material of the ferromagnetic core structure 102. The reluctance torque $T_R$ that can be produced by the permanent magnet electrical machine is substantially:

$$T_R \approx C \times U_s^2(1/L_Q - 1/L_D)\sin(2\delta), \tag{1}$$

where $U_s$ is the stator voltage, $\delta$ is the angle in electrical degrees between the direct-axis D and the space vector of the stator flux produced by the permanent magnets and the stator currents, and C is a constant depending on the number of pole pairs, the frequency of the stator voltage, and the number of phases. As can be seen from equation (1), the maximum value of the reluctance torque that occurs at $\delta$ = 135 electrical degrees can be increased by increasing the quadrature-axis inductance $L_Q$. By increasing the reluctance torque $T_R$ with the aid of the ridges 123 which increase the quadrature-axis inductance $L_Q$, it is possible to achieve the required torque with a smaller amount of expensive permanent magnet material.

The bridge 106 between the mutually adjacent permanent magnets 107 and 108 is advantageously, in the tangential direction, as thin as it can be taking into account the mechanical strength conditions so as to minimize the leakage flux via this bridge 106. The corners of the bridge 106 are advantageously rounded so as to further reduce the leakage flux. The rounding 125 has a shape curving from a surface 117 of the respective permanent magnet 107 towards the air-gap surface of the rotor and further back to the flank of the permanent magnet 107.

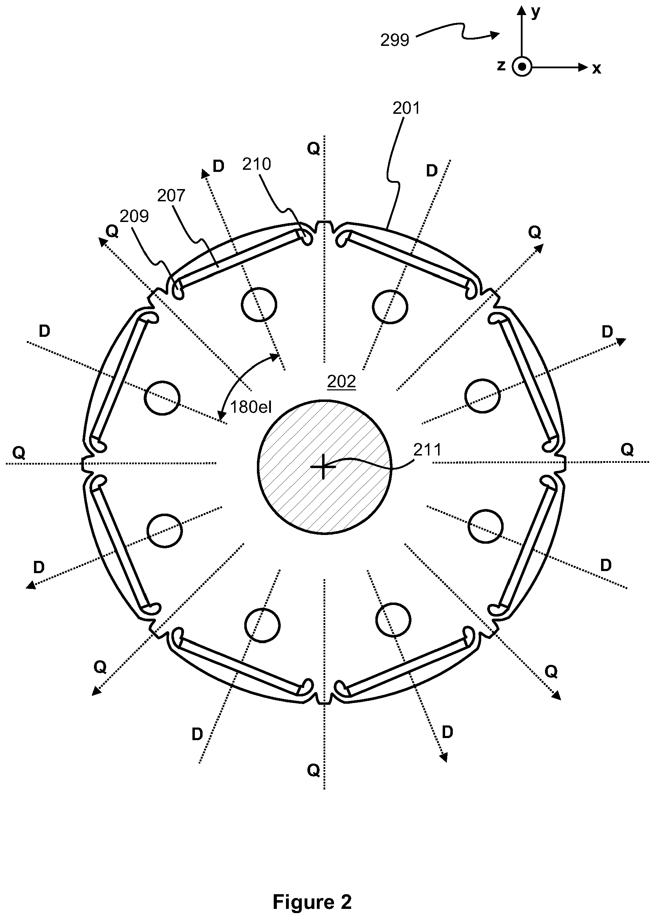

In the rotor 101 of the permanent magnet electrical machine illustrated in figures 1a and 1b, the number of the permanent magnets per the number of the magnetic poles of the rotor is two, i.e. there are two permanent magnets per each magnetic pole of the rotor. Figure 2 shows a section view of a rotor 201 according to an exemplifying embodiment of the invention where there is one permanent magnet per each magnetic pole of the rotor. The section shown in figure 2 is taken along a plane perpendicular to the geometrical rotation axis 211 of the rotor 201, i.e. the section is taken along the xy-plane of a coordinate system 299. The rotor 201 comprises a ferromagnetic core structure 202 comprising cavities dividing the ferromagnetic core structure into pole regions, a yoke region, and bridges between the pole regions and the yoke region. The rotor 201 comprises permanent magnets, such as a permanent magnet 207, located in the cavities and arranged to produce magnetic fluxes penetrating the pole regions in radial directions so as to form magnetic poles of the rotor. The direction of the magnetic flux penetrating each pole region defines a direct-axis D of the corresponding magnetic pole and a symmetry line between direct-axes of two adjacent magnetic poles defines a quadrature-axis Q between these two adjacent magnetic poles. The cavities have portions, such as portions 209 and 210, which extend towards the quadrature-axis Q and are free from the permanent magnets so as to form non-ferromagnetic regions for reducing leakage fluxes of the permanent magnets. These portions of the cavities have a shape curving towards the geometrical rotation axis 211 of the rotor, and the radial height of these portions of the cavities is greater than the radial thickness of the parts of the permanent magnets abutting on these portions of the cavities.

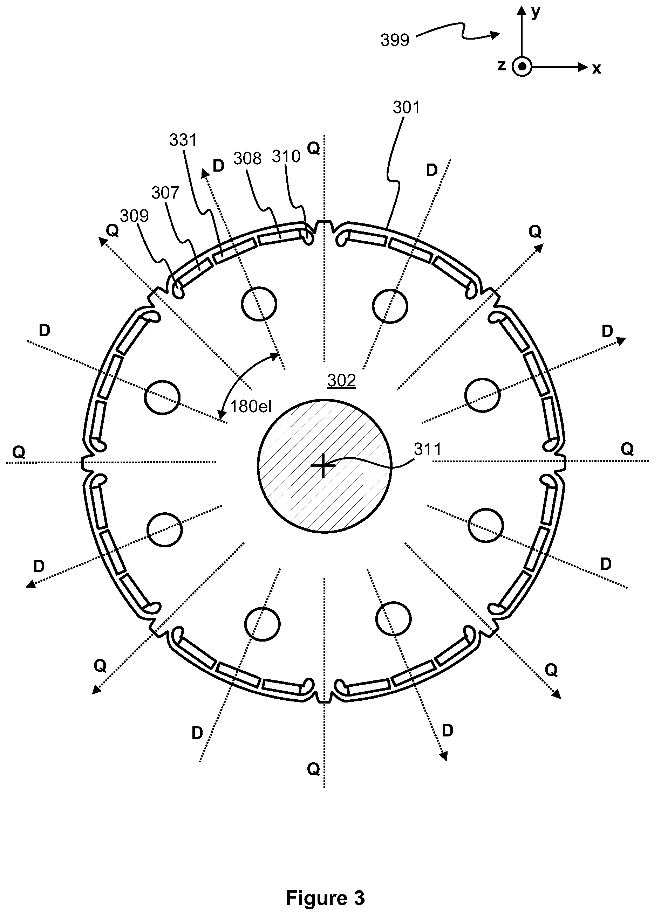

Figure 3 shows a section view of a rotor 301 according to an exemplifying embodiment of the invention where there are three permanent magnets per each magnetic pole of the rotor. One of the magnetic poles comprises permanents magnets 307 and 308 that are tangentially as outmost and a permanent magnet 331 between them. As shown in figure 3, these three permanent magnets 307, 331 and 308 are arranged to approximate an arch. It is also possible to use a single curved permanent magnet instead of the three rectangular permanent magnets 307, 308, and 331 but it is more complicated and expensive to manufacture curved permanent magnets than rectangular ones. The section shown in figure 3 is taken along a plane perpendicular to the geometrical rotation axis 311 of the rotor 301, i.e. the section is taken along the xy-plane of a coordinate system 399. The rotor 301 comprises a ferromagnetic core structure 302 comprising cavities dividing the ferromagnetic core structure into pole regions, a yoke region, and bridges between the pole regions and the yoke region. The rotor 301 comprises permanent magnets, including the permanent magnets 307, 331 and 308, located in the cavities and arranged to produce magnetic fluxes penetrating the pole regions in radial directions so as to form magnetic poles of the rotor. The direction of the magnetic flux penetrating each pole region defines a direct-axis D of the corresponding magnetic pole, and a symmetry line between direct-axes of two adjacent magnetic poles defines a quadrature-axis Q between these two adjacent magnetic poles. The cavities have portions, such as portions 309 and 310, which extend towards the quadrature-axis Q and are free from the permanent magnets so as to form non-ferromagnetic regions for reducing leakage fluxes of the permanent magnets. These portions of the cavities have a shape curving towards the geometrical rotation axis 311 of the rotor, and radial height of these portions of the cavities is greater than the radial thickness of the parts of the permanent magnets abutting on these portions of the cavities.

The number of magnetic poles of the rotors 101, 201 and 301 illustrated in figures 1a, 1b, 2 and 3 is eight, i.e. the number of the pole pairs is four. Thus, the 180 electrical degrees shown in figures 1a, 2 and 3 corresponds to 180/4 = 45 mechanical degrees. It should be noted that the present invention is not limited to any particular number of poles but the number of poles can be 2, 4, 6 or some bigger even number.

In a rotor according to an exemplifying embodiment of the invention, the number of the magnetic poles of the rotor is at least ten, i.e. the number of the pole pairs is at least five. In applications where a permanent magnet electrical machine is supplied with a frequency converter and high torque is needed at a slow rotation speed, it is often advantageous to have a high number of magnetic poles because the frequency of the supply voltage can be increased by increasing the number of the magnetic poles and, furthermore, the yoke portions of the rotor and the stator can be made thinner when the number of the magnetic poles is increased. The higher frequency of the supply voltage makes it easier to cool the power electronic components of the main circuit of the frequency converter because the load and no-load periods of the power electronic components alternate more frequently. The possibility to make the yoke portions of the stator and the rotor thinner provides savings in the amount of material, the size, and the weight of the permanent magnet electrical machine.

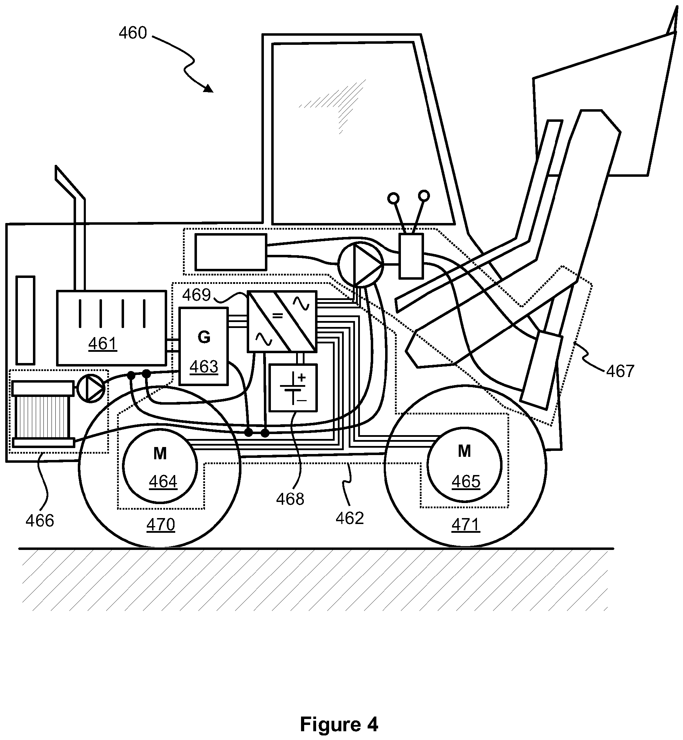

Figure 4 shows an illustration of a mobile working machine 460 according to an embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 461 that can be e.g. a diesel engine, an Otto-cycle engine, or a turbine engine. The mobile working machine comprises an electromechanical power transmission chain 462 between the combustion engine and wheels 470, 471 of the mobile working machine. The electromechanical transmission chain comprises a generator 463 the rotor of which is connected to the shaft of the combustion engine. The electromechanical transmission chain comprises a frequency converter 469 and electrical motors 464, 465 at the hubs of the wheels of the mobile working machine. The frequency converter 469 is arranged to convert the electrical voltage produced by the generator 463 into electrical voltages having amplitudes and frequencies suitable for the electrical motors 464, 465. The frequency converter may have separate output stages for all the electrical motors 464, 465 in which case each electrical motor can be controlled individually, or all the electrical motors 464, 465 can be connected to one and the same output stage of the frequency converter in which case the electrical motors are controlled as a group. The electrical motors 464, 465 are permanent magnet electrical machines each of which comprising a stator and a rotor, wherein the rotor comprises:

- a ferromagnetic core structure comprising cavities dividing the ferromagnetic core structure into pole regions, a yoke region, and bridges between the pole regions and the yoke region, and
- permanent magnets located in the cavities and arranged to produce magnetic fluxes penetrating the pole regions in radial directions so as to form magnetic poles of the rotor, the direction of the magnetic flux penetrating each pole region defining a direct-axis of the corresponding magnetic pole and a symmetry line between direct-axes of two adjacent magnetic poles defining a quadrature-axis between these two adjacent magnetic poles.

The cavities have portions which extend towards the quadrature-axis and are free from the permanent magnets so as to form non-ferromagnetic regions for reducing leakage fluxes of the permanent magnets. Furthermore, the above-mentioned portions of the cavities have a shape curving as defined in claim 1 towards the geometrical rotation axis of the rotor, and the radial height of these portions of the cavities is greater than radial thickness of parts of the permanent magnets abutting on these portions of the cavities.

In a mobile working machine according to an embodiment of the invention, also the generator 463 is a permanent magnet electrical machine of the kind described above. It is also possible that only the generator 463 is a permanent magnet electrical machine of the kind described above, and the electrical motors 464, 465 are electrical machines of some other kind.

A mobile working machine according to an embodiment of the invention comprises a liquid cooling system 466 arranged to cool the electromechanical power transmission chain 462.

A mobile working machine according to an embodiment of the invention comprises a liquid cooling system arranged to cool both a hydraulic system 467 of the mobile working machine and the electromechanical power transmission chain 462.

A mobile working machine according to an embodiment of the invention comprises a liquid cooling system arranged to cool both the electromechanical power transmission chain 462 and the combustion engine 461.

In a mobile working machine according to an embodiment of the invention, the electromechanical power transmission chain comprises a battery 468 and/or an electric double-layer capacitor arranged to respond to peak power needs exceeding the maximum power of the combustion engine 461. The battery and/or the electric double-layer capacitor can be connected, for example, to a direct voltage intermediate circuit of the frequency converter 469. An electric double-layer capacitor is often called a "super capacitor".

The specific examples provided in the description given above should not be construed as limiting. Therefore, the invention is not limited merely to the exemplifying embodiments described above.

## Claims

1. A rotor (101, 201, 301) for a permanent magnet electrical machine, the rotor comprising:

   - a ferromagnetic core structure (102, 202, 302) comprising cavities dividing the ferromagnetic core structure into pole regions (103), a yoke region (104), and bridges (105, 106) between the pole regions and the yoke region, and
   - permanent magnets (107, 108, 207, 307, 308, 331) located in the cavities and arranged to produce magnetic fluxes penetrating the pole regions in radial directions so as to form magnetic poles of the rotor, the direction of the magnetic flux penetrating each pole region defining a direct-axis (D) of the corresponding magnetic pole and a symmetry line between direct-axes of two adjacent magnetic poles defining a quadrature-axis (Q) between these two adjacent magnetic poles,

   wherein the cavities have portions (109, 110, 209, 210, 309, 310) which extend towards the quadrature-axis (Q) and are free from the permanent magnets so as to form non-ferromagnetic regions for reducing leakage fluxes of the permanent magnets, and the portions (109, 110, 209, 210, 310) of the cavities have a shape curving towards a geometrical rotation axis (111, 211, 311) of the rotor and radial height (H) of the portions (109, 110, 209, 210, 309, 310) of the cavities is greater than radial thickness (T) of parts of the permanent magnets (107, 108, 207, 208, 307, 308, 331) abutting on the portions of the cavities, **characterized in that** each of surfaces (112, 113) of the ferromagnetic core structure defining the portions (109, 110, 209, 210, 309, 310) of the cavities and facing towards the non-ferromagnetic regions defines a section curve in a plane perpendicular to the geometrical rotation axis (111) of the rotor so that:

a) the section curve is curvilinear on a portion of the section curve from a first point (114) of the section curve farthest from the geometrical rotation axis of the rotor to a second point (115) of the section curve nearest to the geometrical rotation axis of the rotor,
b) the radius of curvature (R) of the section curve depends on distance to the geometrical rotation axis of the rotor so that, on the portion of the section curve from the first point (114) of the section curve to the second point (115) of the section curve, the radius of curvature (R) is an ascending function of the distance, and
c) the section curve is substantially tangentially directed at the first point (114) of the section curve and meets the relevant permanent magnet (107, 108, 207, 208, 307, 308, 331) at the first point (114) of the section curve.

2. A rotor according to claim 1, wherein the permanent magnets are rectangular prisms, a direction of magnetization (116) of each permanent magnet (107) is substantially perpendicular to two mutually opposite facets (117, 118) of that permanent magnet, and a spatial line (119) via a center of mass of that permanent magnet and perpendicular to the two mutually opposite facets of that permanent magnet is substantially radially directed.

3. A rotor according to claim 2, wherein the number of the permanent magnets (107, 108) per the number of the magnetic poles of the rotor is two.

4. A rotor according to any of claims 1-3, wherein the ferromagnetic core structure comprises grooves (120, 121) on its outer surface between adjacent magnetic poles of the rotor for narrowing the bridges (105) which are tangentially as outmost in each magnetic pole of the rotor so as to reduce the leakage fluxes of the permanent magnets.

5. A rotor according to claim 4, wherein there are two grooves (120, 122) between adjacent magnetic poles of the rotor so that there is a ridge (123) between these two grooves so as to increase a quadrature-axis inductance.

6. A rotor according to claims 1-5, wherein the number of the magnetic poles of the rotor is at least ten.

7. A rotor according to any of claims 1-6, wherein the ferromagnetic core structure comprises ferromagnetic steel sheets stacked in the direction of the geometrical rotation axis of the rotor.

8. A rotor according to any of claims 1-6, wherein the ferromagnetic core structure is made of solid steel.

9. A rotor according to any of claims 1-8, wherein the radial height (H) of the portions of the cavities is at least 10 % greater than the radial thickness (T) of the parts of the permanent magnets abutting on the portions of the cavities.

10. A rotor according to claim 2 or 3, wherein corners of the bridges (106) between adjacent permanent magnets of each magnetic pole of the rotor comprise roundings (125) that extend away from the respective corners of the permanent magnets so as to form non-ferromagnetic regions for reducing leakage fluxes of the permanent magnets.

11. A mobile working machine (460) comprising:

- a combustion engine (461), and
- an electromechanical power transmission chain (462) between the combustion engine and one or more wheels (470, 471) of the mobile working machine,

wherein the electromechanical transmission chain comprises at least one permanent magnet electrical machine (463-465) comprising a rotor according to any of claims 1-10 and a stator.

12. A mobile working machine according to claim 11, wherein the mobile working machine comprises a liquid cooling system (466) arranged to cool the electromechanical power transmission chain.

13. A mobile working machine according to claim 12, wherein the liquid cooling system is arranged to cool both the electromechanical power transmission chain and a hydraulic system (467) of the mobile working machine.

**14.** A mobile working machine according to claim 12, wherein the liquid cooling system is arranged to cool both the electromechanical power transmission chain and the combustion engine.

**15.** A mobile working machine according to any of claims 11-14, wherein the electromechanical power transmission chain comprises at least one of the following for responding to peak power needs exceeding the maximum power of the combustion engine: a battery (468), an electric double-layer capacitor.

**Patentansprüche**

**1.** Rotor (101, 201, 301) für eine elektrische Maschine mit Dauermagneten, der Rotor umfassend:

- eine ferromagnetische Kernstruktur (102, 202, 302), umfassend Hohlräume, die die ferromagnetische Kernstruktur in Polbereiche (103), einen Jochbereich (104) und Brücken (105, 106) zwischen den Polbereichen und dem Jochbereich teilt, und
- Dauermagneten (107, 108, 207, 307, 308, 331), die sich in den Hohlräumen befinden und angeordnet sind, magnetische Flüsse zu erzeugen, die in radialen Richtungen in die Polbereiche eindringen, um Magnetpole des Rotors zu bilden, wobei die Richtung des magnetischen Flusses, der in jeden Polbereich eindringt, eine Direktachse (D) des entsprechenden Magnetpols definiert und eine Symmetrielinie zwischen Direktachsen zweier benachbarter Magnetpole eine Quadraturachse (Q) zwischen diesen zwei benachbarten Magnetpolen definiert,

wobei die Hohlräume Teilbereiche (109, 110, 209, 210, 309, 310) aufweisen, die sich zu der Quadraturachse (Q) hin erstrecken und frei von den Dauermagneten sind, um nicht-ferromagnetische Bereiche zur Verringerung von Leckflüssen der Dauermagneten zu bilden, und die Teilbereiche (109, 110, 209, 210, 310) der Hohlräume eine Form aufweisen, die in einer Kurve zu einer geometrischen Drehachse (111, 211, 311) des Rotors hin verläuft und eine radiale Höhe (H) der Teilbereiche (109, 110, 209, 210, 309, 310) der Hohlräume größer als die radiale Dicke (T) von Teilen der Dauermagneten (107, 108, 207, 208, 307, 308, 331) ist, die an den Teilbereichen der Hohlräume anliegen, **dadurch gekennzeichnet, dass** jede der Flächen (112, 113) der ferromagnetischen Kernstruktur, die die Teilbereiche (109, 110, 209, 210, 309, 310) der Hohlräume definiert und den nicht-ferromagnetischen Bereichen zugewandt ist, eine Abschnittskurve in einer Ebene senkrecht zu der geometrischen Drehachse (111) des Rotors definiert, so dass:

a) die Abschnittskurve auf einem Teilbereich der Abschnittskurve von einem ersten Punkt (114) der Abschnittskurve, der am weitesten von der geometrischen Drehachse des Rotors entfernt ist, zu einem zweiten Punkt (115) der Abschnittskurve, der der geometrischen Drehachse des Rotors am nächsten liegt, gekrümmt ist,
b) der Krümmungsradius (R) der Abschnittskurve von einem Abstand zu der geometrischen Drehachse des Rotors abhängt, so dass auf dem Teilbereich der Abschnittskurve von dem ersten Punkt (114) der Abschnittskurve zu dem zweiten Punkt (115) der Abschnittskurve der Krümmungsradius (R) eine ansteigende Funktion des Abstands ist, und
c) die Abschnittskurve an dem ersten Punkt (114) der Abschnittskurve im Wesentlichen tangential gerichtet ist und den entsprechenden Dauermagneten (107, 108, 207, 208, 307, 308, 331) an dem ersten Punkt (114) der Abschnittskurve trifft.

**2.** Rotor nach Anspruch 1, wobei die Dauermagneten rechteckige Prismen sind, eine Magnetisierungsrichtung (116) jedes Dauermagneten (107) im Wesentlichen senkrecht zu zwei einander gegenüberliegenden Facetten (117, 118) jenes Dauermagneten verläuft und eine räumliche Linie (119) über einen Massenmittelpunkt jenes Dauermagneten und senkrecht zu den zwei einander gegenüberliegenden Facetten jenes Dauermagneten im Wesentlichen radial gerichtet ist.

**3.** Rotor nach Anspruch 2, wobei die Anzahl der Dauermagneten (107, 108) pro Anzahl der Magnetpole des Rotors zwei beträgt.

**4.** Rotor nach einem der Ansprüche 1 bis 3, wobei die ferromagnetische Kernstruktur Nuten (120, 121) auf ihrer Außenfläche zwischen benachbarten Magnetpolen des Rotors zur Verengung der Brücken (105) umfasst, die tangential so am weitesten außen in jedem Magnetpol des Rotors gelegen sind, dass die Leckflüsse der Dauermagneten verringert werden.

**5.** Rotor nach Anspruch 4, wobei zwei Nuten (120, 122) zwischen benachbarten Magnetpolen des Rotors vorliegen, so dass eine Erhöhung (123) zwischen diesen beiden Nuten vorliegt, um eine Quadraturachsen-Induktanz zu erhöhen.

**6.** Rotor nach Anspruch 1 bis 5, wobei die Anzahl der Magnetpole des Rotors mindestens zehn beträgt.

**7.** Rotor nach einem der Ansprüche 1 bis 6, wobei die ferromagnetische Kernstruktur ferromagnetische Stahlbleche umfasst, die in der Richtung der geometrischen Drehachse des Rotors gestapelt sind.

**8.** Rotor nach einem der Ansprüche 1 bis 6, wobei die ferromagnetische Kernstruktur aus massivem Stahl gefertigt ist.

**9.** Rotor nach einem der Ansprüche 1 bis 8, wobei die radiale Höhe (H) der Teilbereiche der Hohlräume mindestens 10 % größer als die radiale Dicke (T) der Teile der Dauermagneten ist, die an den Teilbereichen der Hohlräume anliegen.

**10.** Rotor nach Anspruch 2 oder 3, wobei Ecken der Brücken (106) zwischen benachbarten Dauermagneten jedes Magnetpols des Rotors Rundungen (125) umfassen, die sich von den jeweiligen Ecken der Dauermagneten weg erstrecken, um nicht-ferromagnetische Bereiche zur Verringerung von Leckflüssen der Dauermagneten zu bilden.

**11.** Mobile Arbeitsmaschine (460), umfassend:

- einen Verbrennungsmotor (461), und
- einen elektromechanischen Antriebsstrang (462) zwischen dem Verbrennungsmotor und einem oder mehreren Rädern (470, 471) der mobilen Arbeitsmaschine,

wobei der elektromechanische Antriebsstrang mindestens eine elektrische Maschine mit Dauermagneten (463 - 465) umfassend einen Rotor nach einem der Ansprüche 1 bis 10 und einen Stator umfasst.

**12.** Mobile Arbeitsmaschine nach Anspruch 11, wobei die mobile Arbeitsmaschine ein Flüssigkeitskühlsystem (466) umfasst, das angeordnet ist, den elektromechanischen Antriebsstrang zu kühlen.

**13.** Mobile Arbeitsmaschine nach Anspruch 12, wobei das Flüssigkeitskühlsystem angeordnet ist, sowohl den elektromechanischen Antriebstrang als auch ein Hydrauliksystem (467) der mobilen Arbeitsmaschine zu kühlen.

**14.** Mobile Arbeitsmaschine nach Anspruch 12, wobei das Flüssigkeitskühlsystem angeordnet ist, sowohl den elektromechanischen Antriebstrang als auch den Verbrennungsmotor zu kühlen.

**15.** Mobile Arbeitsmaschine nach einem der Ansprüche 11 bis 14, wobei der elektromechanische Antriebsstrang mindestens eins des Folgenden zum Reagieren auf Spitzenleistungsbedarfe umfasst, die die maximale Leistung des Verbrennungsmotors übersteigen: eine Batterie (468), einen elektrischen Doppelschichtkondensator.

**Revendications**

**1.** Rotor (101, 201, 301) pour une machine électrique à aimants permanents, le rotor comprenant :

- une structure de noyau ferromagnétique (102, 202, 302) comprenant des cavités divisant la structure de noyau ferromagnétique en régions polaires (103), une région de culasse (104), et des ponts (105, 106) entre les régions polaires et la région de culasse, et
- des aimants permanents (107, 108, 207, 307, 308, 331) situés dans les cavités et étudiés pour produire des flux magnétiques pénétrant les régions polaires dans des directions radiales de façon à former des pôles magnétiques du rotor, la direction du flux magnétique pénétrant chaque région polaire définissant un axe longitudinal (D) du pôle magnétique correspondant, et une ligne de symétrie entre des axes directs de deux pôles magnétiques adjacents définissant un axe transversal (Q) entre ces deux pôles magnétiques adjacents,

dans lequel les cavités ont des parties (109, 110, 209, 210, 309, 310) qui s'étendent vers l'axe transversal (Q) et sont exemptes d'aimants permanents de façon à former des régions non ferromagnétiques pour réduire des flux de fuite des aimants permanents, et les parties (109, 110, 209, 210, 310) des cavités ont une forme se courbant vers un axe de rotation géométrique (111, 211, 311) du rotor, et une hauteur radiale (H) des parties (109, 110, 209, 210, 310) des cavités est supérieure à une épaisseur radiale (T) de parties des aimants permanents (107, 108, 207, 208, 307, 308, 331) arrivant en butée contre les parties des cavités, **caractérisé en ce que** chacune des surfaces (112, 113) de la structure de noyau ferromagnétique définissant les parties (109, 110, 209, 210, 310) des cavités et faisant face aux régions non ferromagnétiques définit une courbure sectionnelle dans un plan perpendiculaire à l'axe de rotation géométrique (111) du rotor de sorte que :

a) la courbure sectionnelle est curvilinéaire au niveau d'une partie de la courbure sectionnelle, d'un premier point (114) de la courbure sectionnelle le plus éloigné de l'axe de rotation géométrique du rotor à un deuxième point (115) de la courbure sectionnelle le plus proche de l'axe de rotation géométrique du rotor,

b) le rayon de courbure (R) de la courbure sectionnelle dépend d'une distance par rapport à l'axe de rotation géométrique du rotor de sorte que, au niveau de la partie de la courbure sectionnelle du premier point (114) de la courbure sectionnelle au deuxième point (15) de la courbure sectionnelle, le rayon de courbure (R) est une fonction croissante de la distance, et

c) la courbure sectionnelle est sensiblement orientée tangentiellement sur le premier point (114) de la courbure sectionnelle et rencontre l'aimant permanent pertinent (107, 108, 207, 208, 307, 308, 331) au niveau du premier point (114) de la courbure sectionnelle.

2. Rotor selon la revendication 1, dans lequel les aimants permanents sont des prismes rectangulaires, une direction de magnétisation (116) de chaque aimant permanent (107) est sensiblement perpendiculaire à deux facettes mutuellement opposées (117, 118) de cet aimant permanent, et une ligne spatiale (119) via un centre de masse de cet aimant permanent et perpendiculaire aux deux facettes mutuellement opposées de cet aimant permanent est sensiblement orientée radialement.

3. Rotor selon la revendication 2, dans lequel le nombre d'aimants permanents (107, 108) par nombre de pôles magnétiques du rotor est de deux.

4. Rotor selon l'une quelconque des revendications 1-3, dans lequel la structure de noyau ferromagnétique comprend des rainures (120, 121) sur sa surface extérieure entre des pôles magnétiques adjacents du rotor pour rendre plus étroits les ponts (105) tangentiellement les plus à l'extérieur dans chaque pôle magnétique du rotor de manière à réduire les flux de fuite des aimants permanents.

5. Rotor selon la revendication 4, dans lequel il y a deux rainures (120, 122) entre des pôles magnétiques adjacents du rotor, de sorte qu'il y a une arête (123) entre ces deux rainures de manière à augmenter une inductance d'axe transversal.

6. Rotor selon les revendications 1-5, dans lequel le nombre de pôles magnétiques du rotor est au moins de dix.

7. Rotor selon l'une quelconque des revendications 1-6, dans lequel la structure de noyau ferromagnétique comprend des tôles d'acier ferromagnétiques empilées dans la direction de l'axe de rotation géométrique du rotor.

8. Rotor selon l'une quelconque des revendications 1-6, dans lequel la structure de noyau ferromagnétique est formée par de l'acier pris dans la masse.

9. Rotor selon l'une quelconque des revendications 1-8, dans lequel la hauteur radiale (H) des parties des cavités est au moins de 10% supérieure à l'épaisseur radiale (T) des parties des aimants permanents arrivant en butée contre les parties des cavités.

10. Rotor selon la revendication 2 ou 3, dans lequel des angles des ponts (106) entre des aimants permanents adjacents de chaque pôle magnétique du rotor comprennent des arrondissements (125) qui s'étendent loin des angles respectifs des aimants permanents de façon à former des régions non ferromagnétiques pour réduire des flux de fuite des aimants permanents.

11. Machine de travail mobile (460) comprenant :

- un moteur à combustion (461), et
- une chaîne de transmission d'énergie électromagnétique (462) entre le moteur à combustion et une ou plusieurs roues (470, 471) de la machine de travail mobile,

dans laquelle la chaîne de transmission électromécanique comprend au moins une machine électrique à aimants permanents (463-465) comprenant un rotor selon l'une quelconque des revendications 1-10 et un stator.

12. Machine de travail mobile selon la revendication 11, dans laquelle la machine de travail mobile comprend un système de refroidissement par liquide (466) étudié pour refroidir la chaîne de transmission d'énergie électromécanique.

13. Machine de travail mobile selon la revendication 12, dans laquelle le système de refroidissement par liquide est étudié pour refroidir à la fois la chaîne de transmission d'énergie électromécanique et un système hydraulique (467) de la machine de travail mobile.

14. Machine de travail mobile selon la revendication 12, dans laquelle le système de refroidissement par liquide est étudié pour refroidir à la fois la chaîne de transmission d'énergie électromécanique et le moteur à combustion.

15. Machine de travail mobile selon l'une quelconque des revendications 11-14, dans laquelle la chaîne de transmission d'énergie électromécanique comprend au moins l'un(e) parmi ce qui suit pour répondre à des besoins de puissance de crête dépassant la puissance maximale du moteur à combustion : une batterie (468), un condensateur à double-couche électrique.

**Figure 1a**

Figure 1b

**Figure 2**

**Figure 3**

**Figure 4**

**EP 2 602 911 B1**

**REFERENCES CITED IN THE DESCRIPTION**

**Patent documents cited in the description**

- EP 2362525 A
- US 2008272667 A
- EP 2012410 A
- US 2005269888 A
- JP 2010110049 B